# EUROPÄISCHE PATENTSCHRIFT

(11) **EP 1 177 397 B1**
(45) Veröffentlichungstag und Bekanntmachung des Hinweises auf die Patenterteilung: **24.11.2004**
(21) Anmeldenummer: 00927118.0
(22) Anmeldetag: 02.05.2000
(51) Int. Cl.: F16L 25/00, F16L 33/207, F16L 33/26

(54) **SCHLAUCH MIT GEWELLTER INNENFLÄCHE UND EINSCHUBTEIL**
FLEXIBLE TUBE WITH A CORRUGATED INNER SURFACE AND AN INSERTABLE COMPONENT
TUYAU SOUPLE A SURFACE INTERIEURE ONDULEE ET A ELEMENT D'INSERTION

(30) Priorität: 29.04.1999 DE 19919440
(43) Veröffentlichungstag der Anmeldung: 06.02.2002
(73) Patentinhaber: Eaton Fluid Power GmbH, 76532 Baden-Baden (DE)
(72) Erfinder: FRITZ, Thomas, D-76593 Gernsbach (DE); SCHNEIDER, Axel, D-76547 Sinsheim (DE)
(74) Vertreter: Gleiss & Grosse
(86) Internationale Anmeldenummer: PCT/EP2000/003918
(87) Internationale Veröffentlichungsnummer: WO 2001/009544

(56) Entgegenhaltungen:
- DE-A- 19 723 410
- US-A- 5 169 182
- US-A- 5 349 988

## Beschreibung

Die Erfindung betrifft einen Schlauch mit einem Einschubteil gemäß Oberbegriff des Anspruchs 1.

Eine solche Anordnung ist von dem Dokument US 5 349 988 bekannt.

Schläuche der angesprochenen Art sind bekannt. Sie dienen zur Förderung von gasförmigen oder flüssigen Medien und kommen beispielsweise in der Automobilindustrie zum Einsatz, wo sie unter anderem in Klimaanlagen und/oder Lenkhelfeinrichtungen Verwendung finden. Sie werden vom Hersteller "als Meterware" gefertigt und auf ein gewünschtes Maß zugeschnitten. Die Endbereiche der so entstehenden Schläuche müssen so vorbereitet werden, daß die Schläuche auf geeignete Weise in ein System zur Förderung von vorzugsweise gasförmigen Medien integriert werden können. Dazu ist an mindestens einem Ende ein auch als Fitting bezeichnetes Einschubteil vorgesehen, welches in dieses Ende eingebracht wird. Die hier angesprochenen Schläuche sind auf ihrer Innenseite mit einer gewellten Innenfläche versehen, sie weisen dort also Erhöhungen und Vertiefungen auf. Es ist erforderlich, daß der Schlauch gegenüber dem Einschubteil dicht abschließt, damit die Medien auch unter hohem Druck gefördert werden können, ohne daß im Bereich des Einschubteils das zu fördernde Medium austritt. Das in zumindest ein Ende eines Schlauchs eingesteckte Einschubteil steht über das Ende des Schlauches hinaus und kann mit einer Anschlußstelle dichtend verbunden werden. Dabei ist es möglich, den Schlauch an ein geeignetes Element innerhalb der zur Förderung des gasförmigen Mediums dienenden Einrichtung anzuschließen, aber auch, Schlauchenden miteinander zu verbinden.

Es hat sich herausgestellt, dass bei bestimmten Betriebszuständen ein dichter Abschluß zwischen dem Einschubteil und dem zugehörigen Schlauchende nicht auf Dauer erzielt werden kann. In einigen Fällen hat sich auch die Verbindung zwischen Schlauch und Einschubteil gelöst.

Es ist daher Aufgabe der Erfindung, einen Schlauch zu schaffen, der eine feste und dichtende Verbindung zwischen dem Schlauch und dem Einschubteil möglich macht.

Diese Aufgabe wird durch einen Schlauch gelöst, der die in Anspruch 1 genannten Merkmale aufweist. Das Dichtelement, das im Berührbereich zwischen der Innenfläche des Schlauches und der Außenfläche des Einschubteils vorgesehen ist und das aus einem kristallinen, Material besteht, kann insbesondere aus einem metallischen Material, vorzugsweise aus einer Blei- oder Kupferlegierung, gebildet sein. Das Dichtelement verhindert den Austritt des durch den Schlauch geförderten Mediums, so daß dieses den Berührbereich zwischen der Innenfläche des Schlauches und der Außenfläche des Einschubteils nicht beschädigen kann. Dadurch wird einerseits sichergestellt, daß die Verbindung zwischen Schlauch und Einschubteil auf Dauer dicht bleibt und andererseits, daß sich diese Verbindung nicht löst.

Das Material des Dichtelements ist weicher als das Material der Innenfläche des Schlauches. Damit wird das Dichtelement, das sich vor Einführen des Einschubteils in den Vertiefungen der Innenfläche des Schlauches befindet, bei Einführen des Einschubteils plastisch oder elastisch verformt, wodurch durch die Haftreibung zwischen dem Dichtelement und der Innenfläche des Schlauches eine kraftschlüssige und/oder durch Kerbung oder Ritzung des Dichtelements eine formschlüssige Verbindung zwischen dem Dichtelement und der Innenfläche des Schlauches zustande kommt.

Ein weiteres Ausführungsbeispiel des Schlauches sieht vor, daß die Vertiefungen an der Innenfläche des Schlauches durch ringförmig umlaufende Nuten gebildet werden. Diese Ausgestaltung macht es möglich, daß in eine oder mehrere Vertiefungen ein ringförmiges Dichtelement einsetzbar ist. Es ist hier möglich, auf einfache Weise eine dichtende Verbindung zwischen Einschubteil und Schlauch herzustellen.

Bei einem bevorzugten Ausführungsbeispiel des Schlauches ist vorgesehen, daß die Vertiefung durch eine auf einer gedachten Schraubenlinie umlaufende Nut gebildet wird. Diese Ausgestaltung erleichtert das Einbringen der Dichtelemente, die dann als offene Ringe ausbildet sind, in das Innere des Schlauches. Die hier verwendeten Dichtelemente folgen also der schraubenlinienförmigen Vertiefung. Ihre Länge kann an den jeweiligen Dichtungsfall angepaßt werden. Es ist also möglich, Dichtelemente einzusetzen, die auch mehr als einmal um die Außenfläche des Einschubteils herum verlaufen. Hier ist es überdies, in Analogie zu den ringförmigen Dichtelementen, möglich, in aneinander angrenzende Nuten beziehungsweise Vertiefungen Dichtelemente einzubringen.

Bei einem weiteren bevorzugten Ausführungsbeispiel des Schlauches weist das Dichtelement einen kreisförmigen oder polygonförmigen, vorzugsweise dreieckförmigen oder trapezförmigen, Querschnitt auf. Der kreisförmige Querschnitt des Dichtelements stellt besonders viel Fläche zur Verfügung, die mit der Innenfläche des Schlauches kraftschlüssig in Verbindung treten kann. Beim polygonförmigen Querschnitt ist es möglich, daß das Dichtelement mit einem Kantenbereich an der Innenfläche des Schlauches oder Außenfläche des Einschubteils anliegt, so daß besonders hohe Flächenpressungskräfte entwickelt werden, die auch die sichere Abdichtung hoher Druckwerte ermöglichen.

Ein weiteres bevorzugtes Ausführungsbeispiel des Schlauches sieht vor, daß das Einschubteil aus Edelstahl, Kunststoff, Polyamid oder dergleichen besteht. Die Wahl dieser Materialien hat den Vorteil, daß deren Handling unproblematisch ist, eine einfache Herstellung der Einschubteile mithin möglich ist.

Weitere bevorzugte Ausführungsbeispiele ergeben sich aus den übrigen Unteransprüchen.

Die Erfindung wird im folgenden anhand der Zeichnung näher erläutert. Es zeigen:
- Figur 1: einen Längsschnitt durch ein erstes Ausführungsbeispiel des Schlauches;
- Figur 2a: eine Draufsicht auf ein erstes Ausführungsbeispiel eines Dichtelementes;
- Figur 2b: eine Draufsicht auf ein zweites Ausführungsbeispiel eines Dichtelementes;
- Figur 3a: einen Schnitt entlang der Ebene E durch eines der Dichtelemente gemäß Figur 1;
- Figur 3b: einen Schnitt entlang der Ebene E durch ein weiteres Dichtelement gemäß Figur 1 und
- Figur 3c: einen Schnitt entlang der Ebene E durch ein weiteres Dichtelement gemäß Figur 1.

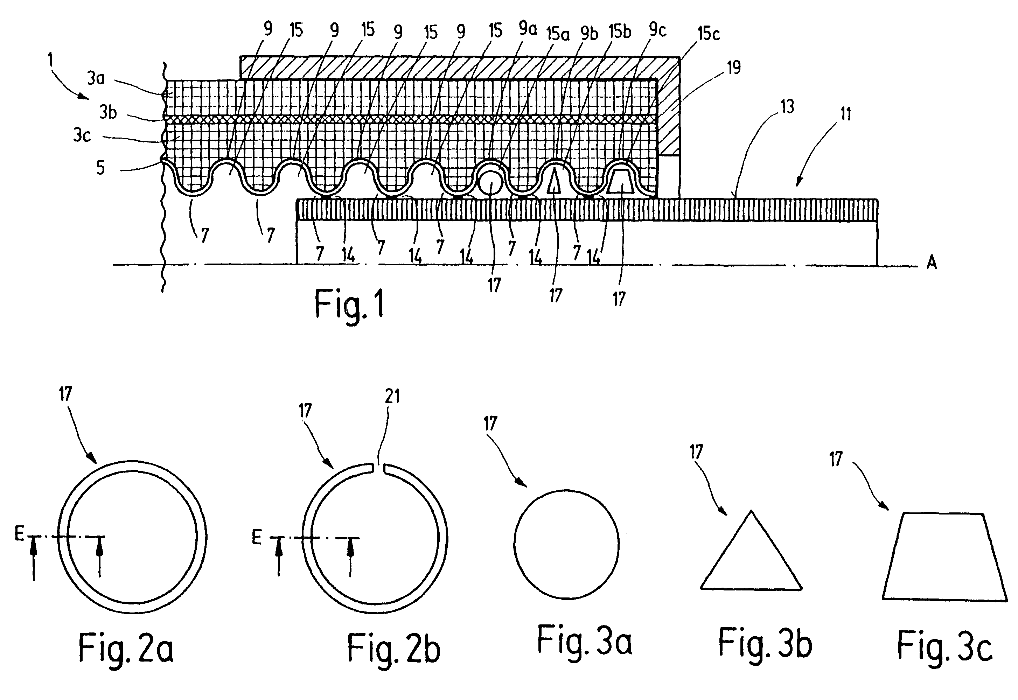

Figur 1 zeigt die obere Hälfte eines Längsschnitts durch einen Schlauch 1. Dieser umfaßt einen Schlauchmantel 3, der aus mehreren einzelnen Lagen beziehungsweise koaxial zueinander angeordneten, aneinanderliegenden Einzelschichten 3a, 3b, 3c besteht. Die Anzahl der den Schlauchmantel 3 bildenden Einzelschichten ist selbstverständlich nicht auf drei festgelegt; die drei Einzelschichten 3a, 3b, 3c sind hier nur beispielhaft dargestellt. Die Innenseite des Schlauches ist gewellt ausgebildet; an seiner Innenfläche 5 weist der Schlauch 1 also Erhöhungen 7 und Vertiefungen 9 auf. Im Zuge dieser Anmeldung werden unter den Erhöhungen 7 die am weitesten nach innen ragenden Abschnitte der Innenfläche 5 des Schlauches 1 verstanden, das heißt diejenigen Abschnitte, die einer Mittelachse A am nächsten sind. Die Vertiefungen 9 sind entsprechend diejenigen Abschnitte der Innenfläche 5 des Schlauches 1, die den größten Abstand von der Mittelachse A aufweisen. Die Erhöhungen 7 beziehungsweise die Vertiefungen 9 bilden gemäß Figur 1 auf der Innenfläche 5 des Schlauches 1 eine hier beispielhaft gleichmäßig dargestellte ausgebildete Wellenstruktur W aus. Die Wellenstruktur W der Innenfläche 5 des Schlauches 1 kann sich auf den in Figur 1 gezeigten Endbereich des Schlauches 1 beschränken, aber auch den Schlauch 1 in seiner gesamten Länge durchziehen. Die letztgenannte Variante wird deshalb bevorzugt, weil sie einfacher herstellbar und damit preiswerter ist. Es ist vorzugsweise vorgesehen, die Wellenstruktur W durch ein Wellrohr zu realisieren.

Figur 1 zeigt des weiteren ein von rechts her in das Ende des Schlauches 1 eingeschobenes Einschubteil 11. Der Innendurchmesser des Schlauches und der Außendurchmesser des Einschubteils 11 sind so aufeinander abgestimmt, dass die Erhöhungen 7 zusammen mit den Vertiefungen 9 und einer Außenfläche 13 des Einschubteils 11 Kammern 15 bilden. In diese sind Dichtelemente 17 eingebracht. Die Erhöhungen 7 berühren hier an Berührabschnitten 14 die Außenfläche 13 des Einschubteils 11. Aus Figur 1 ist ersichtlich, dass die geometrische Form der Berührabschnitte 14 vom Verhältnis des Außendurchmessers des Einschubteils 11 zum Innendurchmesser des Schlauches 1 und insbesondere vom Krümmungsradius der Erhöhungen 7 im Bereich der Berührabschnitte 14 abhängt.

Der Längsschnitt durch den Schlauch 1 zeigt nur die "obere Hälfte" des Schlauches 1, das heißt er stellt sowohl das Ausführungsbeispiel, bei dem die Vertiefungen 9 durch ringförmig umlaufende Nuten gebildet werden, als auch das Ausführungsbeispiel, das als Vertiefung 9 eine oder mehrere, auf einer gedachten Schraubenlinie umlaufende Nuten aufweist, dar. Bei ersterem ergibt sich die "untere Hälfte" des Schlauches 1 durch bloße Rotation der "oberen Hälfte" um die Mittelachse A, wohingegen sich bei letzterem die "untere Hälfte" des Schlauches 1 durch Rotation der "oberen Hälfte" um die Mittelachse A bei gleichzeitigem Längsversatz entlang der Mittelachse A ergibt.

Figur 1 zeigt des weiteren eine das Schlauchende übergreifende Hülse 19. Diese dient der Fixierung des aus dem Schlauch 1 herausragenden Einschubteils 11 im Endbereich des Schlauches 1. Sie bietet des weiteren der am weitesten außen gelegenen Einzelschicht 3a des Schlauches 1 einen Schutz gegenüber äußeren mechanischen Einwirkungen und verhindert, daß die Einzelschichten sich am Ende des Schlauches auffächern, wodurch der Schlauch letztlich zerstört würde.

Der Schlauch 1 weist in den den Vertiefungen 9a, 9b, 9c zugeordneten Kammern 15a, 15b, 15c hier drei Dichtelemente 17 auf. Die Dichtelemente 17 sind - der Deutlichkeit halber- in Figur 1 so dargestellt, daß sie nicht mit den Erhöhungen 7, den Vertiefungen 9 der Innenfläche 5 des Schlauches 1 und den Außenflächen 13 des Einschubteils 1 in Berührverbindung stehen. In der Praxis sind die Dichtelemente 17 in den Kammern 15 natürlich gestaucht bzw. deformiert. Auch die Kerbungen oder Ritzungen, die sich aufgrund des Härteunterschieds der Materialien des Dichtelements 17 und des Einschubteils 11 am Dichtelement 17 ergeben, sind in Figur 1 nicht zeichnerisch umgesetzt.

Im Endbereich des Schlauches 1 können ein oder mehrere Dichtelemente 17 vorgesehen werden. Falls mehrere eingesetzt werden, können diese gleichartige oder auch verschiedene Querschnittsformen aufweisen. So ist der Querschnitt des in Kammer 15a befindlichen Dichtelements 17 kreisförmig, der des in Kammer 15b befindlichen Dichtelements 17 dreieckförmig, während der Querschnitt des in Kammer 15c befindlichen Dichtelements 17 trapezförmig ist.

In Figur 1 sind Dichtelemente in drei aufeinanderfolgenden Kammern dargestellt. Dazu ist folgendes zu sagen: Die Anzahl der verwendeten Dichtelemente hängt von den verschiedenen Betriebsfällen ab. In der Regel wird es ausreichend sein, in einer der zwischen Einschubteil 11 und Innenfläche 5 des Schlauches 1 gebildeten Kammern 15 ein Dichtelement unterzubringen. Denkbar ist es jedoch auch, beispielsweise bei hohem Innendruck innerhalb des Schlauches 1, in mehr als eine Kammer ein Dichtelement einzusetzen und bei Bedarf, wie hier dargestellt, in mehreren Kammern, auch in mehreren nebeneinanderliegenden Kammern, Dichtelemente vorzusehen, die auch unterschiedliche Querschnittsformen aufweisen können.

Die Figuren 2a und 2b zeigen die Dichtelemente 17 in Draufsicht. Das in Figur 2a dargestellte Ausführungsbeispiel des Dichtelements 17 wird bei demjenigen Ausführungsbeispiel des Schlauches 1 verwendet, das als Vertiefungen 9 ringförmig umlaufende Nuten vorsieht, wohingegen das in Figur 2b dargestellte Ausführungsbeispiel des Dichtelements 17 in Zusammenhang mit demjenigen Ausführungsbeispiel des Schlauches 1 verwendet wird, bei dem als Vertiefung 9 eine oder mehrere nebeneinander liegende, auf einer gedachten Schraubenlinie umlaufende Nuten vorgesehen ist. Bei diesem Ausführungsbeispiel ist das Dichtelement 17 mit einem Schlitz 21 versehen und gegebenenfalls spiralförmig ausgebildet, so daß die Enden des Dichtelements 17 nicht in einer Ebene liegen. Die Länge des in Figur 2b dargestellten Dichtelements entspricht praktisch der Länge des Dichtelements 17, das in Figur 2a dargestellt ist. Es ist bei einem geringen Innendruck innerhalb des Schlauches 1 jedoch möglich, relativ kurze Dichtelemente in der schraubenlinienförmig ausgebildeten Nut beziehungsweise Vertiefung 9 anzuordnen und damit eine sichere Abdichtung des Schlauchinneren zu gewährleisten. Bei hohem Druck innerhalb des Schlauches 1 ist es umgekehrt jedoch möglich, Dichtelemente mit einer Länge zu verwenden, die wesentlich größer ist, als die des ringförmigen Dichtelements in Figur 2a. Es ist beispielsweise denkbar, daß das Dichtelement 17 gemäß Figur 2b sich über mehrere Windungen der gedachten Schraubenlinie erstreckt und damit einen besonders großen Dichtbereich gewährleistet.

Die Figuren 3a, 3b und 3c zeigen einen Schnitt durch die Figuren 2a beziehungsweise 2b dargestellten Dichtelemente entlang der Schnittebene E. Figur 3a zeigt hierbei ein Dichtelement 17 mit kreisförmigem, Figur 3b ein Dichtelement 17 mit dreieckförmigem und Figur 3c ein Dichtelement 17 mit trapezförmigem Querschnitt. Andere Querschnitte sind selbstverständlich ebenso denkbar.

Ein Dichtelement 17 mit kreisförmigem Querschnitt gemäß Figur 3a zeichnet sich durch einen besonders großen Anlagebereich sowohl an der Außenfläche des Einschubteils 11 als auch an der Innenfläche 5 des Schlauches 1 aus. Wenn der Außendurchmesser des Dichtelements 17 im wesentlichen der Breite der Vertiefung 9 und insbesondere dem doppelten Krümmungsradius des Grundes der Vertiefung 9 entspricht, ergeben sich besonders große Anlageflächen und damit große Dichtbereiche.

In Figur 3 sind auch Dichtelemente mit polygonförmig ausgebildeten Querschnitten dargestellt. Ein erstes Dichtelement ist im Querschnitt dreieckförmig ein zweites trapezförmig. Bei dieser Ausgestaltung ist es denkbar, daß eine oder mehrere Kanten des Dichtelements mit der Innenfläche des Schlauches 1 beziehungsweise der Außenfläche des Einschubteils 11 so in Eingriff treten, dass Kerbungen oder Ritzungen entstehen, so dass hier ebenfalls eine optimale Dichtung gewährleistet ist.

Aufgrund der Tatsache, daß die Dichtelemente 17 aus einem kristallinen, insbesondere aus metallischem Material bestehen, ergibt sich eine hohe chemische Widerstandsfestigkeit gegenüber den innerhalb des Schlauches geförderten Medien. Außerdem ist es möglich, die Dichtelemente 17 bei sehr hohen Temperaturen und Druckwerten einzusetzen. Besonders bewährt haben sich Dichtelemente 17, die aus einer Blei- oder Kupferlegierung hergestellt sind.

Es hat sich herausgestellt, dass die hier beschriebene Verbindung zwischen dem Schlauchende und dem Einschubteil besonders betriebssicher ist. Das heißt, dass auch bei hohem Innendruck sich ein druckdichter Abschluss zwischen der Innenfläche des Schlauches und der Außenfläche des Einschubteils ergibt. Erreicht wird dies durch die hier beschriebenen Dichtelemente, die aus einem kristallinen Material bestehen und damit besonders formstabil sind. Sie werden also auch bei hohem Innendruck im Schlauch nicht aus ihrer dichtenden Lage abgedrängt oder gar aus der zugehörigen Vertiefung herausgedrängt beziehungsweise quasi extrudiert. Die Dichtungselemente sind aber nicht nur gegenüber hohem Druck resistent sondern auch gegenüber den im Inneren des Schlauches vorhandenen Medien beziehungsweise Temperaturen.

Die Dichtelemente sind also in einem weitem Anwendungsbereich in der Lage, eine feste und dichtende Verbindung zwischen dem Schlauch und dem Einschubteil zu gewährleisten.

Besonders bewährt hat es sich, Dichtelemente aus einer Bleilegierung oder aber aus einer Kupfer-Knetlegierung zu verwenden, die eine Bruchdehnung in einem Bereich von 0 % bis über 60 % aufweist beziehungsweise sich durch eine Streckgrenze auszeichnet, die im Bereich von 10 bis 500 N/mm² liegt. Der E-Modul dieser Legierung liegt im Bereich von 90 bis 120•10³N/mm². Die Kupfer-Knetlegierung setzt sich aus Kupfer und Legierungsbestandteilen zusammen, die bis zu 50 % der Legierung ausmachen können. Als Legierungsbestandteil wird vorzugsweise Zink und/oder Zinn verwendet. Für das Dichtelement kann vorzugsweise eine Kupfer-Zink-Legierung verwendet werden (CuZn30), die durch die Werkstoffnummer 2.0265 gekennzeichnet ist.

Die innerste Schicht 3c des Schlauches 1 kann auf ihrer Innenseite eine Metallbeschichtung aufweisen. Es ist auch möglich, hier ein sogenanntes Wellrohr einzusetzen, auf dessen Außenseite die Einzelschicht 3c aufliegt beziehungsweise fest aufgebracht ist.

Für die Metallbeschichtung beziehungsweise das Wellrohr kann vorzugsweise ein nichtrostender Stahl mit der Werkstoffnummer 1.4541, 1.4404 oder 1.4571 eingesetzt werden. Das hier verwendete Material zeichnet sich durch eine Legierung mit hohen Anteilen an Chrom beziehungsweise auch Nickel aus. Die Streckgrenze des Materials liegt im Bereich von 100 bis 500 N/mm² und die Bruchdehnung im Bereich von 0 % bis über 500 %. Der E-Modul liegt im Bereich von 190 bis 220•10³N/mm².

Für das Einschubteil 11 wird vorzugsweise ein Automatenstahl mit der Werkstoffnummer 1.0718 beziehungsweise nichtrostender Stahl mit der Werkstoffnummer 1.4541, 1.4571 oder 1.4301 verwendet. Die Streckgrenze des Materials sollte im Bereich von 50 bis über 500 N/mm² und die Bruchdehnung in einem Bereich von 0 % bis über 50 % liegen. Der E-Modul (Elastizitätsmodul) sollte im Bereich von 190 bis 220•10³N/mm² liegen.

Wesentlich ist im übrigen noch, dass die Hülse 19 eine derartige Kraft auf das Schlauchende ausübt, dass das Dichtelement 17 zwischen der Schlauchinnenfläche 5 beziehungsweise zwischen der metallischen Beschichtung der Einzelschicht 3c oder dem Wellrohr und dem Einschubteil 11 so eingespannt wird, dass eine elastische oder plastische Verformung des Dichtelements eintritt und die gewünschte Abdichtung erreicht wird. Diese dichte Wirkung wird dadurch verbessert, dass geeignete Materialien für das Dichtelement, die metallische Beschichtung beziehungsweise das Wellrohr und das Einschubteil miteinander kombiniert werden. Dabei ist es besonders vorteilhaft, wenn für das Dichtelement ein leicht verformbares Material verwendet wird, das sich bei Montage der Hülse am Schlauch zwischen dem Schlauch und dem Einschubteil derart verformt, dass dadurch eine kraft- beziehungsweise formschlüssige Verbindung entsteht und die Dichtwirkung verstärkt wird.

## Patentansprüche

1. Schlauch (1) zur Förderung von vorzugsweise gasförmigen Medien bei hohen Temperaturen und unter hohem Druck mit einer gewellten, Vertiefungen (9) und Erhöhungen (7) aufweisenden Innenfläche (5) und mindestens einem in ein Ende des Schlauchs (1) einbringbaren Einschubteil (11), wobei im Berührbereich zwischen der Innenfläche (5) des Schlauchs (1) und der Außenfläche (13) des Einschubteils (11) mindestens ein Dichtelement (17) vorgesehen ist, **dadurch gekennzeichnet, dass** das Dichtelement (17) aus einem kristallinen Material besteht und das Material des Dichtelements (17) weicher als das Material der Innenfläche (5) des Schlauchs (1) ist.

2. Schlauch nach Anspruch 1, **dadurch gekennzeichnet, dass** die Vertiefungen (9) durch ringförmig umlaufende Nuten gebildet werden.

3. Schlauch nach einem der Ansprüche 1 oder 2, **dadurch gekennzeichnet, dass** das Dichtelement (17) als geschlossener Ring ausgebildet ist.

4. Schlauch nach Anspruch 1, **dadurch gekennzeichnet, dass** die Vertiefung (9) durch eine auf einer gedachten Schraubenlinie umlaufende Nut gebildet wird.

5. Schlauch nach einem der Ansprüche 1 oder 4, **dadurch gekennzeichnet, dass** das Dichtelement (17) als offener Ring beziehungsweise spiralförmig ausgebildet ist.

6. Schlauch nach einem der vorhergehenden Ansprüche, **dadurch gekennzeichnet, dass** das Dichtelement (17) einen kreisförmigen oder polygonförmigen, vorzugsweise dreieckförmigen oder trapezförmigen Querschnitt aufweist.

7. Schlauch nach einem der vorhergehenden Ansprüche, **dadurch gekennzeichnet, dass** zwischen dem Dichtelement (17) und dem Schlauch (1) eine kraft- und/oder formschlüssige Verbindung vorgesehen ist.

8. Schlauch nach einem der vorhergehenden Ansprüche, **dadurch gekennzeichnet, dass** zwischen dem Dichtelement (17) und dem Einschubteil (11) eine kraft- und/oder formschlüssige Verbindung vorgesehen ist.

9. Schlauch nach einem der vorhergehenden Ansprüche, **dadurch gekennzeichnet, dass** das Einschubteil (11) aus Edelstahl, Kunststoff, Polyamid oder dergleichen besteht.

10. Schlauch nach einem der vorhergehenden Ansprüche, **dadurch gekennzeichnet, dass** für das Dichtelement (17) eine Kupfer-Knetlegierung, vorzugsweise eine Kupfer-Zink-Legierung verwendet wird, die sich durch eine Bruchdehnung im Bereich von 0 % bis über 60 % und/oder eine Streckgrenze im Bereich von 10 bis 500 N/mm² und/oder durch einen Elastizitätsmodul (E-Modul) im Bereich von 90 bis 120•10³N/mm² auszeichnet.

11. Schlauch nach einem der vorhergehenden Ansprüche, **dadurch gekennzeichnet, dass** seine Innenfläche mit einer metallischen Beschichtung oder mit einem Wellrohr versehen ist.

12. Schlauch nach Anspruch 11, **dadurch gekennzeichnet, dass** die metallische Beschichtung beziehungsweise das Wellrohr einen nichtrostenden Stahl mit einer Streckgrenze im Bereich von 100 bis 500 N/mm² und/oder mit einer Bruchdehnung im Bereich von 0 % bis über 50 % und/oder einem Elastizitätsmodul im Bereich von 190 bis 220•10³N/mm² umfasst.

13. Schlauch nach einem der vorhergehenden Ansprüche, **dadurch gekennzeichnet, dass** für das Einschubteil ein Automatenstahl beziehungsweise ein nichtrostender Stahl mit einer Streckgrenze im Bereich von 50 bis über 500 N/mm² und/oder einer Bruchdehnung im Bereich von 0 % bis über 50 % und oder einem Elastizitätsmodul im Bereich von 190 bis 220•10³N/mm² verwendbar ist.

## Claims

1. Hose (1) for transporting preferably gaseous media at high temperatures and under high pressure, with a corrugated interior surface (5) provided with depressions (9) and elevations (7), and at least one insertion element (11) that can be inserted into one end of the hose (1), whereby at least one gasket element (17) is provided in the contact area between the interior surface (5) of the hose (1) and exterior surface (13) of the insertion element (11), **characterized in that** said gasket element (17) consists of a crystalline material and the material of the gasket element (17) is softer than the material of interior surface (5) of the hose (1).

2. Hose according to Claim 1, **characterized in that** said depressions (9) consist of circumferential ring-shaped grooves.

3. Hose according to one of Claims 1 or 2, **characterized in that** said gasket element (17) is configured as a closed ring.

4. Hose according to Claim 1, **characterized in that** said depression (9) is configured as a helical groove along an imaginary helix.

5. Hose according to Claim 1 or 4, **characterized in that** said gasket element (17) is configured as an open ring or is of spiral shape, respectively.

6. Hose according to one of the preceding claims, **characterized in that** said gasket element (17) has a circular or polygonal cross-section, but preferably a triangle or trapezium as cross-section.

7. Hose according to one of the preceding claims, **characterized in that** between said gasket element (17) and hose (1) a force and/or form closure is provided.

8. Hose according to one of the preceding claims, **characterized in that** between said gasket element (17) and said insertion element (11) a force and/or form closure is provided.

9. Hose according one of the preceding claims, **characterized in that** said insertion element (11) is made of stainless steel, plastic, polyamide or the like.

10. Hose according to one of the preceding claims, **characterized in that** for said gasket element (17) a copper-wrought alloy, but preferably a copper-zinc alloy that exhibits fracture strain from 0 % up to over 60 % and/or yield stress in the range from 10 up to 500 N/mm² and/or modulus of elasticity (E module) in the range from 90 up to 120 x 10³ N/mm².

11. Hose according to one of the preceding claims, **characterized in that** its interior surface is provided with a metallic coating or a corrugated pipe.

12. Hose according to Claim 11, **characterized in that** said metallic coating or corrugated pipe, respectively, comprises a stainless steel with yield stress in the range from 100 up to 500 N/mm² and/or fracture strain in the range from 0 % to over 50 % and/or modulus of elasticity in the range from 190 up to 220 x 10³ N/mm².

13. Hose according to one of the preceding claims, **characterized in that** for the insertion element is made of a free-cutting steel or a stainless steel having yield stress in the range from 50 up to 500 N/mm² and/or fracture strain in the range from 0 % to over 50 % and/or elasticity modulus in the range from 190 up to 220 x 10³ N/mm².

## Revendications

1. Tuyau (1) pour la manutention de milieux préférablement gazeux à hautes températures et sous pression élevée avec une surface intérieure ondulée (5) comprenant des évidements (9) et des parties en saillie (7) et au moins un élément d'insertion (11) adapté à être inséré dans un bout du tuyau (1), avec au moins un élément d'étanchéité (17) étant prévu dans la zone de contact entre la surface intérieure (5) du tuyau (1) et la surface extérieure (13) de l'élément d'insertion (11), **caractérisé en ce que** l'élément d'étanchéité (17) est constitué d'un matériau cristallin et que le matériau de l'élément d'étanchéité (17) est plus souple que le matériau de la surface intérieure (5) du tuyau (1).

2. Tuyau selon la revendication 1, **caractérisé en ce que** les évidements (9) sont formés par des rainures disposées sur la totalité du pourtour de manière annulaire.

3. Tuyau selon l'une des revendications 1 ou 2, **caractérisé en ce que** l'élément d'étanchéité (17) se présente sous la forme d'un anneau fermé.

4. Tuyau selon la revendication 1, **caractérisé en ce que** l'évidement (9) est formé par une rainure disposée sur la totalité du pourtour sur une hélice imaginaire.

5. Tuyau selon l'une des revendications 1 ou 4, **caractérisé en ce que** l'élément d'étanchéité (17) se présente sous la forme d'un anneau ouvert et une spirale, respectivement.

6. Tuyau selon l'une des revendications précédentes, **caractérisé en ce que** l'élément d'étanchéité (17) présente une section transversale circulaire ou polygonale, de préférence triangulaire ou trapézoïdale.

7. Tuyau selon l'une des revendications précédentes, **caractérisé en ce qu'**une liaison par adhérence et/ou par forme complémentaire est prévue entre l'élément d'étanchéité (17) et le tuyau (1).

8. Tuyau selon l'une des revendications précédentes, **caractérisé en ce qu'**une liaison par adhérence et/ou par forme complémentaire est prévue entre l'élément d'étanchéité (17) et l'élément d'insertion (11).

9. Tuyau selon l'une des revendications précédentes, **caractérisé en ce que** l'élément d'insertion (11) est en acier inoxydable, en matière plastique, en polyamide ou similaire.

10. Tuyau selon l'une des revendications précédentes, **caractérisé en ce qu'**on utilise pour l'élément d'étanchéité (17) un alliage de cuivre corroyé, de préférence un alliage cuivre-zinc, qui est remarquable par un allongement à la rupture dans la gamme de 0 % à plus de 60 % et/ou une limite d'élasticité dans la gamme de 10 à 500 N/mm² et/ou un module d'élasticité (module E) dans la gamme de 90 à 120 x 10³ N/mm².

11. Tuyau selon l'une des revendications précédentes, **caractérisé en ce que** sa surface intérieure est munie d'un revêtement métallique ou d'un tube ondulé.

12. Tuyau selon la revendication 11, **caractérisé en ce que** le revêtement métallique et le tube ondulé, respectivement, comprend un acier inoxydable ayant une limite d'élasticité dans la gamme de 100 à 500 N/mm² et/ou un allongement à la rupture dans la gamme de 0 % à plus de 50 % et/ou un module d'élasticité dans la gamme de 190 à 220 x 10³ N/mm².

13. Tuyau selon l'une des revendications précédentes, **caractérisé en ce qu'**un acier de décolletage et un acier inoxydable, respectivement, ayant une limite d'élasticité dans la gamme de 50 à plus de 500 N/mm² et/ou un allongement à la rupture dans la gamme de 0 % à plus de 50 % et/ou un module d'élasticité dans la gamme de 190 à 220 x 10³ N/mm² est utilisable pour l'élément d'insertion.
